# EUROPEAN PATENT SPECIFICATION

(11) **EP 1 487 665 B1**
(45) Date of publication and mention of the grant of the patent: **24.05.2006**
(21) Application number: 03715107.3
(22) Date of filing: 26.03.2003
(51) Int. Cl.: B60P 1/43, A61G 3/06

(54) **MANUALLY OPERATED RAMP ASSEMBLY**
VON HAND BETÄTIGTE RAMPENVORRICHTUNG
ENSEMBLE RAMPE ACTIONNE MANUELLEMENT

(30) Priority: 27.03.2002 GB 0207255
(43) Date of publication of application: 22.12.2004
(73) Proprietor: Truck-Align Co. Ltd., Charlton, London SE7 7RY (GB)
(72) Inventor: ALLEN, Robert, John, Essex SS7 5DQ (GB)
(74) Representative: Brookes Batchellor LLP
(86) International application number: PCT/GB2003/001299
(87) International publication number: WO 2003/082630

(56) References cited:
- GB-A- 2 268 133
- GB-A- 2 301 082
- US-A- 5 935 011

## Description

The present invention relates in general to a manually operated ramp assembly and more particularly a ramp assembly for use primarily with either a public access vehicle or a public building. Such a ramp assembly representing the features of the preamble of claim 1 is known from GB 2 301 082 A.

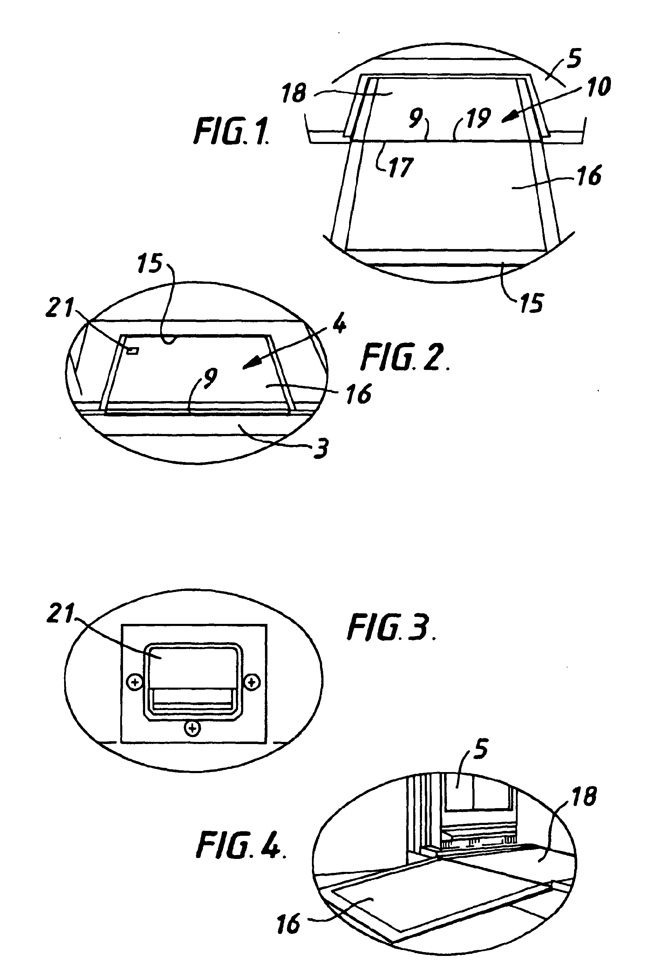

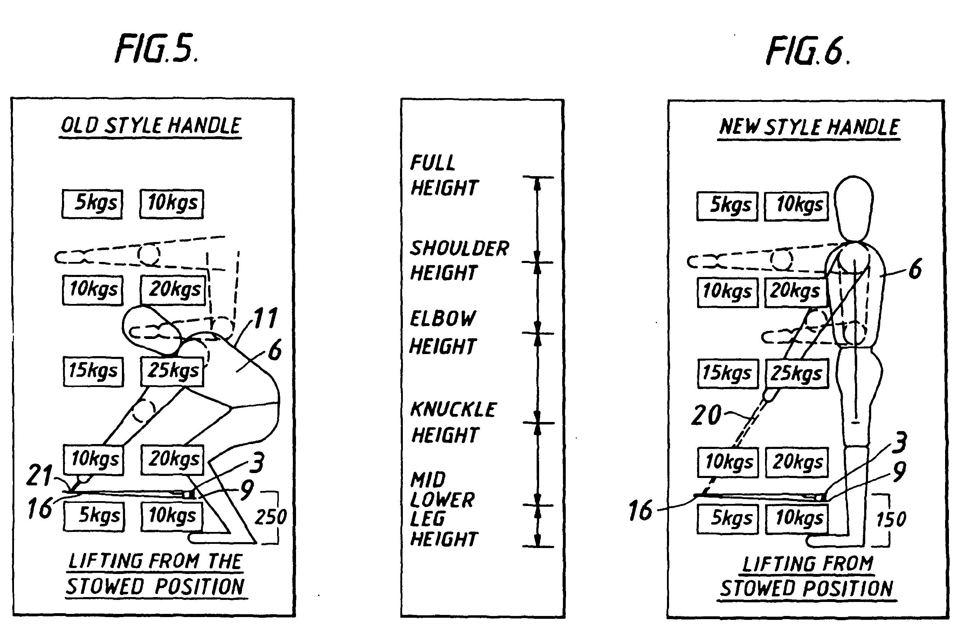

A further known type of manually operated 'book leaf' ramp assembly 10 and the method of operating the assembly is shown in Figures 1-5 and Figure 11. Such a ramp assembly is typically attached within the access step of a public access vehicle 5 as may be seen in Figure 4. The ramp assembly 10 is composed of first and second plate-like platforms 18, 16 pivotably interconnected with a hinge 9 attached to a first outer end region 19 of the first platform 18 and an adjacent second inner end region 17 of the second platform 16. The first or innermost platform 18 remains stationary and can be inset into a floor of the vehicle 5 while the second or outermost platform 16 is moved. By swinging the platform 16 about the hinge 9 the platforms 16, 18 can be stowed one on the other or deployed to create a ramp for easier access to a vehicle 5 (Figure 5). The first platform 18 is normally fitted below the level of the floor of the vehicle to which it is attached so that in the stowed position the ramp assembly 10 forms an integral unit of the floor to which it is secured. When in the stowed position the ramp assembly 10 latches and locks into position and is retained during transit. An end region 15 of the movable platform 16 remote from the hinge 9 is provided with a lifting and locking mechanism 21 accessible when the ramp assembly is stowed. The mechanism 21 can be released by manual operation and presents a lifting ring which enables an operator to raise the platform 16 and swing it around the hinge 9 into the deployed position (Figure 4). In the deployed position the mechanism 21 lies on the underside of the ramp 18, 16. There are disadvantages associated with such an assembly particularly with its operation and potential for injury. The assembly has the locking and lifting mechanism 21 positioned some considerable distance from the step edge (Figure 4). Typically, the locking and lifting mechanism 21 is positioned some 550 mm from the step edge 3 to inside the vehicle. As a result an operator 6 has to lean inside the vehicle and reach for the locking and lifting mechanism 21 some +500 mm from the step edge in order to extend the ramp. In doing so the operator will be in the worst possible posture and liable to personal injury (see Figure 5). Also since this posture is induced, the operator will be able to lift comparatively very little as is indicated by Figure 5.

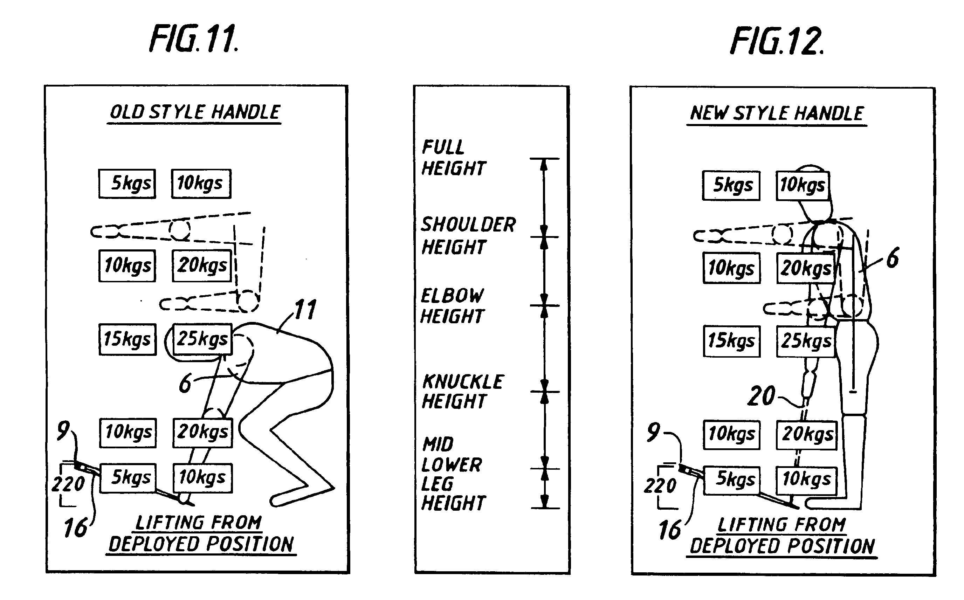

According to the current Health and Safety Regulations the ergonomic body diagrams (Figures 5 and 11) illustrate clearly the increased possibility of injury being caused to the operator 6 as a direct result of the poor design of the ramp assembly. The positioning of the lifting ring of the locking and lifting mechanism 21, as can be seen in Figure 5, is responsible for the poor posture of the body. Figure 5 indicates recommended maximum weights corresponding to different positions of the hands. It can be seen in Figure 5 that the maximum weight is supported by the back 11 of the operator 6 whilst in a bent position - the probability of injury is thus higher. Similarly in Figure 11 when stowing the ramp from the deployed position it is again necessary to bear the load of the ramp on the back 11 of the operator 6 whilst maintaining a posture that could lead to further personal injury. As a result of the poor posture that the current ramp assemblies induce and the increased stress that they place upon the body it may be seen from both Figures 5 and 11 that neither the deployment nor re-deployrnent of the ramp assembly could be executed by a disabled person.

Furthermore the driver of the vehicle 5 is usually responsible for operating the ramp assembly. In order to do so therefore he will be forced to leave the driving area and cash box unattended whilst he extends the ramp assembly as well as causing possible injury to himself for the reasons described above.

It is the aim of the present invention to provide an improved ramp assembly for use in public access vehicles or public buildings to overcome the difficulties herein described.

According to one aspect of the invention there is provided a manually operated ramp assembly comprising: at least two platforms pivotably interconnected at adjacent end regions and capable of being stowed or extended wherein in the stowed position the second platform lies above the first platform and in the extended position the second platform extends in front of and below the first platform to form a smooth gradient and a ramp extension facility consisting of a link, e.g., a pivotable operating lever, attached to an end region of the second platform remote from the pivotably connected region and having a handle which can be accessed from the pivotably connected region of the second platform when the platforms are stowed.

In another aspect the invention provides a ramp assembly composed of articulated platforms capable of extending to form a ramp or being stowed one above the other and an articulated link which can be manually operated to bring the platforms into the stowed or extended positions.

Preferably the link has a handle and the link can itself be stowed in a recess alongside the platforms when the platforms are stowed. An operator can grasp the handle which in the stowed position presents itself near the outwardly facing pivot joint between the platforms and then the link can be manipulated to swing the uppermost platform outwardly to the extended position.

The invention may be understood more readily, and various other features of the invention may become more apparent, from consideration of the following description.

Embodiments of the present invention will now be described hereafter in detail, by way of examples only, and with reference to the accompanying drawings, wherein:
Figure 1 is a front view of a known ramp assembly when extended;
Figure 2 is a front view of a known ramp assembly when stowed;
Figure 3 is a plan view of the known locking and latching mechanism;
Figure 4 is a side view of a known ramp assembly when deployed and attached to public access vehicle;
Figure 5 is a diagrammatic representation of an operator lifting the known ramp assembly from the stowed position;
Figure 6 is a diagrammatic representation of an operator lifting a ramp assembly constructed in accordance with the invention from the stowed position;
Figure 7 is a side view of the ramp assembly shown in Figure 6 at the moment before deployment;
Figure 8 is a side view of the ramp assembly shown in Figure 6 at its maximum height and weight during deployment;
Figure 9 is a side view of the ramp assembly shown in Figure 6 in mid-deployment;
Figure 10 is a side view of the ramp assembly shown in Figure 6 fully deployed;
Figure 11 is a diagrammatic representation of an operator lifting a known ramp assembly from the deployed position;
Figure 12 is a diagrammatic representation of an operator lifting the ramp assembly according to the invention from the deployed position; and
Figure 13 is a plan view of part of another stowed ramp assembly constructed in accordance with the invention.

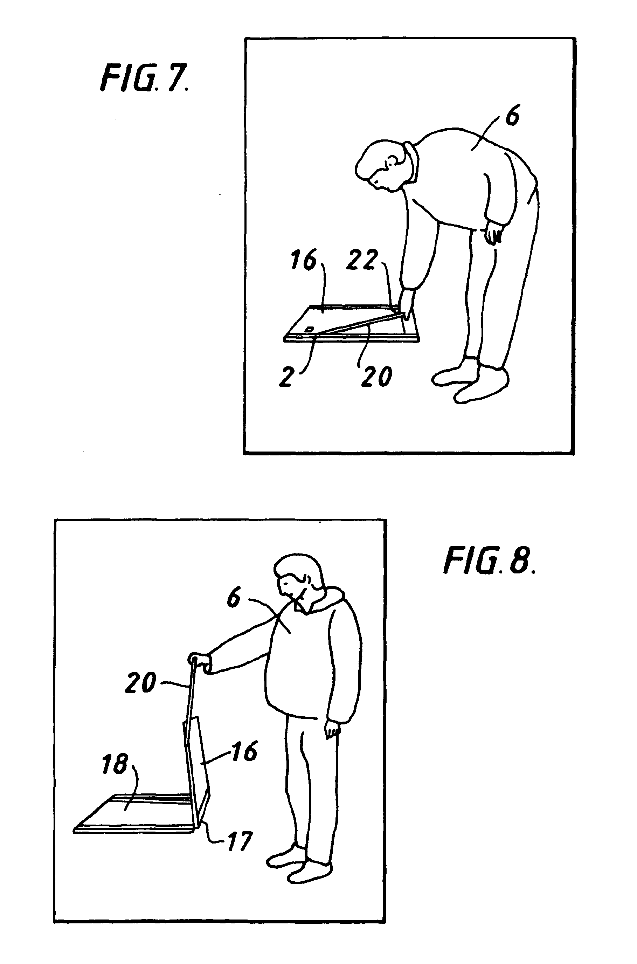

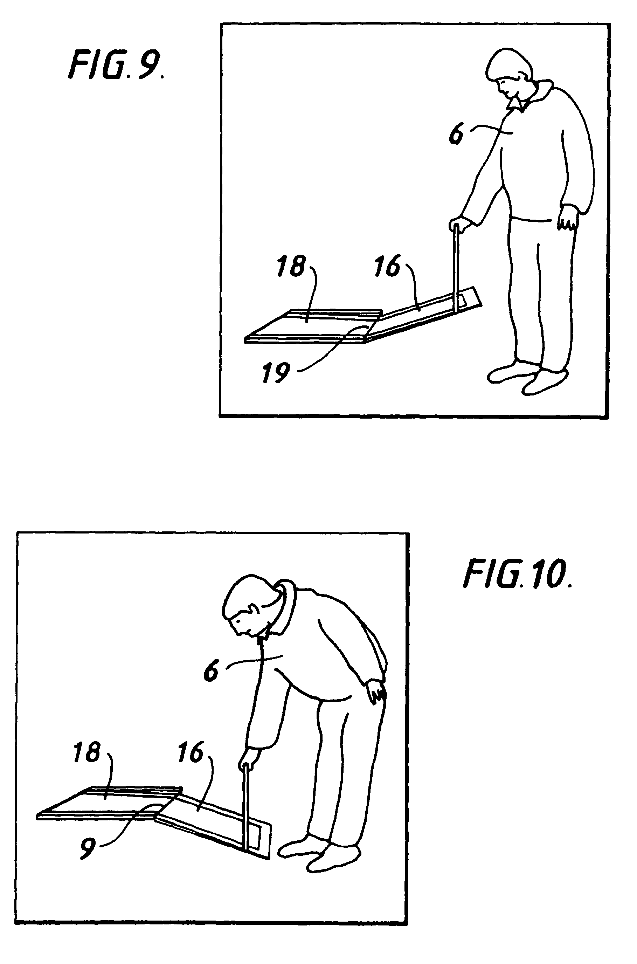

Figure 7 illustrates a modified ramp assembly 10 constructed according to the present invention in the stowed position wherein like reference numerals denote like parts to Figures 1-4. The ramp assembly 10 when extended is illustrated in Figure 10. As before, the first platform 18 is secured to a base or floor on a public access vehicle or a public building whilst the second platform 16 unfolds relative to the first platform and lies in front of and below the first platform 18 (see Figure 10). The first and second platforms 16, 18 are pivotably attached at adjacent first end regions 19, 17 with the hinge 9.

As shown in Figures 7, 8, 9 and 10 in accordance with the present invention the ramp assembly 10 is provided with a ramp extension facility designed to increase the load bearing capacity of the operator 6 and to maintain the best possible posture to avoid injury to the operator 6 whilst extending the ramp assembly 10. As illustrated in Figure 7 the ramp extension facility consists of an operating link, illustrated as a lever 20, pivotably attached with a pivot joint 2 to one side of the second platform 16 of the ramp assembly near the end region 15. The lever 20 has a length almost as large as one of the platforms 16, 18 in the direction of their deployment, i.e. the ramp. At the end of the lever 20 remote from the pivot 2 there is a handle 22 for gripping. The handle 22 of the operating lever 20 is disposed adjacent to the hinged end region 17 of the platform 16. The pivot joint 2 linking the lever 20 to the platform 16 can be located in a similar position to the mechanism 21 in the prior art construction. As can be seen in Figures 8 and 9 in a single continuous movement the operator manoeuvres the operating lever 20 upwards and outwards to raise and extend the second platform 16 towards him. The second platform 16 is pulled upwards and outwards and then lowered to the floor in front of the operator 6 to extend the ramp assembly (Figure 10). When not in use the operating lever 20 can be latched and stored alongside the ramp assembly. In both the stowed and extended positions the handle 22 of the operating lever 20 lays next to the hinge 9 that connects the first and second platforms 18, 16. In other forms, not illustrated, the link may be in the form of a cable or chain, either having a handle 22.

As is illustrated in Figure 6 at all times during the deployment of the ramp assembly the operator 6 remains in the perfect posture and moreover, when the maximum force is required by the operator to extend the ramp i.e. when the ramp is at a right angle, the positioning of the operating lever 20 falls within the best possible ergonomic zone of the body such that the operator 6 is capable of lifting the maximum possible load safely. The recommended maximum load for this position is around 25 kg, however by use of the operating lever 20 this is reduced to less than 25% of the maximum value to 6 kg. It may be seen by comparison to Figure 5 that there is a significant increase in the maximum load bearable by the operator.

The procedure for stowing the ramp assembly is exactly the same but in reverse to that of the deployment procedure. According to Figure 12 the ergonomic body diagram illustrates the posture that the operating lever 20 induces which is in sharp contrast to Figure 11.

It is known to incorporate an automatic brake interlock switch which prevents a vehicle equipped with the ramp assembly 10 being driven when the ramp assembly 10 is fully extended. This interlock switch can be modified so it is activated when the lever 20 or the handle 22 is released for use.

A ramp assembly constructed in accordance with the present invention thus has the advantage over the state of the art in that it can be operated from a location which is convenient to the operator 6. It is not necessary for the user to change hands when deploying and stowing the ramp assembly as this can all be done in one continuous motion. The operator 6 therefore saves time and ensures greater safety. The driver of a public access vehicle does not therefore have to leave the driving area unattended to operate the ramp assembly. As a result of the lifting mechanism and use of the operating lever 20 the ramp assembly may be activated by a disabled person since the maximum force required to extend the ramp is limited to 6 kg.

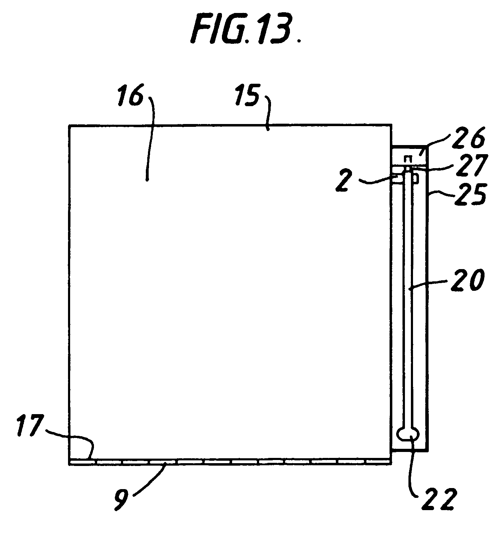

In the embodiment described and illustrated the lever 20 is shown to be located at the lefthand side of the ramp assembly 10 relative to the operator. Figure 13 shows another embodiment in which the lever 20 is located at the right-hand side. In this construction a box-like housing 25 is fixed to the side of the platform 16 and accommodates the lever 20. The box 25 is partially closed by a fixed part cover 26 at one end. The lever 20 has an extension 27 which extends under the part cover 26 to hold the two platforms closed together when the lever 20 is stowed as shown in Figure 13. A spring-loaded flap (not shown) can be released to enable an operator to gain access to the handle 22. The interaction with the brake interlock switch can be accomplished when the flap is released, for example, by a proximity switch.

The platforms 16, 18 in the embodiments described are preferably provided with a slip resistant surface and designed to be wheelchair castor friendly. The hinge mechanism 9 is made from known material to reduce the rate of corrosion and the major surfaces of the ramp platforms 16, 18 are hot metal sprayed and enamel finished.

The pivot joint 2 linking the lever 20 to the platform 16 can be in the form of a universal joint to enable the lever 20 to be moved from side to side as well as raised and lowered.

## Claims

1. A manually operated ramp assembly (10) comprising: at least first (18) and second (16) platforms pivotably interconnected at adjacent end regions (16,17) and capable of being stowed or extended, wherein in the stowed position the second platform (16) lies above the first platform (18), and in the extended position the second platform (16) extends in front of and below the first platform (18) to form a smooth gradient; **characterised by** a ramp extension facility consisting of an operating link (20) attached near an end region of the second platform remote from the pivotably connected region (9) and having a handle (22) which can be disposed adjacent the pivotably connected end region of the second platform (16) when the platforms are stowed.

2. A manually operated ramp assembly according to claim 1, wherein the operating link (20) is mounted with a pivot joint (2) at one side of the second platform (16).

3. A manually operated ramp assembly according to claim 1 or 2, wherein the operating link (20) is stored in a recess or housing.

4. A manually operated ramp assembly according to any one of the preceding claims wherein when the ramp assembly is being deployed for use or is fully extended an automatic brake interlock switch is activated.

5. A manually operated ramp assembly according to any one of the preceding claims wherein, in the stowed position, the ramp assembly is locked into position.

6. A manually operated ramp assembly according to any one of the preceding claims wherein the surfaces of the platform are slip resistant.

## Patentansprüche

1. Manuell bedienbare Rampenanordnung (10), aufweisend: wenigstens erste (18) und zweite (16) Plattformen, die an benachbarten Endabschnitten (16, 17) drehbar miteinander verbunden sind, und in der Lage sind, eingezogen oder ausgefahren zu werden, wobei in der eingezogenen Position die zweite Plattform (16) oberhalb der ersten Plattform (18) liegt, und in der ausgefahrenen Position die zweite Plattform (16) sich vor und unter die erste Plattform (18) erstreckt, um einen sanften Gradienten zu erzeugen; **gekennzeichnet durch** eine Rampenausfahreinrichtung, bestehend aus einer Bedienungsverbindung (20), die nahe eines Endabschnittes der zweiten Plattform angebracht ist in Entfernung zum drehbar verbundenen Bereich (9), und aufweisend eine Handhabe (22), die benachbart zum drehbar verbundenen Endabschnitt der zweiten Plattform (16) untergebracht werden kann, wenn die Plattformen eingezogen sind.

2. Manuell bedienbare Rampenanordung nach Anspruch 1, wobei die Bedienungsverbindung (20) mit einer Drehverbindung (2) an einer Seite der zweiten Plattform (16) angebracht ist.

3. Manuell bedienbare Rampenanordnung nach Anspruch 1 oder 2, wobei die Bedienungsverbindung (20) untergebracht ist in einer Ausnehmung oder einem Gehäuse.

4. Manuell bedienbare Rampenanordnung nach einem der vorhergehenden Ansprüche, wobei, wenn die Rampenanordnung zur Verwendung entfaltet ist oder vollständig ausgefahren ist, ein Automatikbremsenverriegelungsschalter aktiviert ist/wird.

5. Manuell bedienbare Rampenanordnung nach einem der vorhergehenden Ansprüche, wobei in der eingezogenen Position die Rampenanordnung in Raststellung ist.

6. Manuell bedienbare Rampenanordnung nach einem der vorhergehenden Ansprüche, wobei die Oberflächen der Plattform rutschfest sind.

## Revendications

1. Rampe (10) actionnée manuellement comprenant : au moins une première (18) et une deuxième (16) plateforme reliées entre elles à pivotement en des régions (16, 17) d'extrémité voisines et pouvant être rentrées ou déployées, dans laquelle dans la position rentrée la deuxième plateforme (16) se trouve au-dessus de la première plateforme (18) et dans la position déployée la deuxième plateforme (16) s'étend devant et en-dessous de la première plateforme (18) pour former une pente douce ; **caractérisée par** un moyen de rallonge de rampe consistant en une barre (20) de manoeuvre fixée à proximité d'une région d'extrémité de la deuxième plateforme éloignée de la région (9) articulée à pivotement et ayant une poIgnée (22) qui peut être placée au voisinage de la région d'extrémité articulée à pivotement de la deuxième plateforme (16) lorsque les plateformes sont rentrées.

2. Rampe actionnée manuellement suivant la revendication 1, dans laquelle la barre (20) de manoeuvre est montée par une articulation à pivot sur un côté de la deuxième plateforme (16) .

3. Rampe actionnée manuellement suivant la revendication 1 ou 2, dans laquelle la barre (20) de manoeuvre est conservée dans une cavité ou dans un logement.

4. Rampe actionnée manuellement suivant l'une quelconque des revendications précédentes, dans laquelle, lorsque la rampe est en train d'être déployée ou l'est entièrement, un interrupteur de verrouillage automatique de frein est activé.

5. Rampe actionnée manuellement suivant l'une quelconque des revendications précédentes, dans laquelle, dans la position rentrée, la rampe est verrouillée en position.

6. Rampe actionnée manuellement suivant l'une des revendications précédentes, dans laquelle les surfaces de la plateforme sont antiglissantes.
